(19) Europäisches Patentamt
European Patent Office
Office européen des brevets

(11) **EP 2 110 650 A1**

(12) **EUROPEAN PATENT APPLICATION**

(43) Date of publication:
**21.10.2009 Bulletin 2009/43**

(51) Int Cl.:
***G01J 5/00*** *(2006.01)*

(21) Application number: **09251110.4**

(22) Date of filing: **16.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.04.2008 US 103854**

(71) Applicant: **FLUKE CORPORATION
Everett, WA 98203 (US)**

(72) Inventors:
- **Carlson, Paul
  Santa Cruz, CA 95060 (US)**
- **Jain, Samir
  Avon, CT 06001 (US)**

- **Ryan, Jill
  Everett, WA 98203 (US)**
- **Elrod, Jeffrey
  Seattle, WA 98115 (US)**
- **Schmidt, Roger
  Shorewood, MN 55364 (US)**
- **Wilson, Larry
  Arlington, WA 98223 (US)**
- **Schreher, Medwin
  Santa Cruz, CA 95060 (US)**

(74) Representative: **Howe, Steven
  Reddie & Grose
  16 Theobalds Road
  London
  WC1X 8PL (GB)**

(54) **Radiometer with measurement target data reader and temperature compensation system**

(57)    A radiometer (10) for measuring temperature data can include a data reader (50) for reading target data associated with a measurement target and generating temperature data based on the target data. A temperature compensation system can include a radiometer with a data reader and one or more data tags placed proximate corresponding measurement targets. The data tags can contain target data including a target identifier and/or compensation data, among other data. The compensation data can include, for example, a target emissivity. In some embodiments the data reader can include an optical scanning device and/or an RFID reader.

FIG. 1

**Description**

FIELD

The following disclosure relates to systems for noncontact thermal measurement and more particularly to noncontact thermal measurement instruments such as radiometers.

BACKGROUND

Radiometers have long been used in many settings to measure the temperature of objects or targets. Oftentimes radiometers take the form of noncontact infrared thermometers or infrared thermal imagers. Among other uses, these instruments are frequently used in industrial applications as part of a predictive maintenance program. These types of programs typically rely on periodic inspections of the assets of a plant or facility to discover likely failures before they occur. Often plant personnel will develop a survey route in order to routinely gather temperature data on the identified equipment. After collecting a baseline for each piece of equipment, or noting the specified operating temperatures, a technician can then identify changes in the thermal characteristics of equipment over the course of several inspections.

The principle of operation of a radiometer is well known. All surfaces at a temperature above absolute zero emit heat in the form of radiated energy. This radiated energy is created by molecular motion which produces electromagnetic waves. Some of the energy in the material is radiated away from the surface of the material. The radiometer is aimed at the surface from which the measurement is to be taken, and the radiometer optical system receives the emitted radiation and focuses it upon an infrared-sensitive detector. The detector generates an electrical signal which is internally processed by the radiometer circuitry (*e.g.*, microprocessor) and converted into temperature data which can then be displayed.

A number of factors can introduce inaccuracies into the temperature measurements. For example, the amount of radiation emitted from a particular target can largely depend upon the composition of the material and the texture of the target surface. As is well known, these characteristics can be quantified in terms of emissivity, which is the ratio of energy emitted by an object to the energy emitted by a blackbody at the same temperature. If the target is not a perfect source, or blackbody (emissivity = 1.0), it will reflect energy from the surrounding environment as well as radiating its own energy, and this reflected energy can produce erroneous temperature readings. In addition to difficulties with emissivity, other parameters, such as, for example, reflected temperature, can also cause inaccurate readings.

In an effort to mitigate inaccuracies of this type, attempts have been made to compensate for various factors. As just one example explained here, attempts have been made to compensate for the emissivity of a target. For example, U.S. Patent No. 4,634,294 to Christol et al. teaches a temperature measuring instrument that allows an operator to adjust the instrument for the emissivity of a particular target. To do so, the operator can manually depress an up or down switch to incrementally adjust the emissivity setting. Of course, the operator must know the emissivity of the target beforehand in order to adjust the instrument.

At times, a technician may already know the emissivity of a particular target or be able to calculate it as the technician makes his or her way through the inspection route. In some cases, a lead technician or engineer may create the inspection routes and determine the emissivity of each target along the route. Routes can then be assigned to other technicians, along with a list of emissivities for the targets. But even when the proper emissivities are known, human error can lead to erroneous temperature readings. For example, route inspectors may not enter the correct emissivity setting for a particular target. In other cases, a technician may measure targets out of order and forget to make the adjustment when selecting the proper emissivity setting. Due in part to these types of errors, technicians often set the radiometers to a single default emissivity, *e.g.*, 1.0 or 0.95, to make estimated measurements for multiple targets.

Other difficulties with noncontact temperature measurement and measurement compensation will become apparent throughout the following description.

SUMMARY

Embodiments of the invention can include a radiometer for measuring the temperature of a target. The radiometer can include an infrared detector that generates a signal corresponding to sensed infrared radiation and an optical system for collecting the infrared radiation and imaging it onto the infrared detector. The radiometer can also include a data reader adapted to read target data corresponding to a target from a data tag and communicate the target data to a processor. The processor, coupled to the infrared detector and the data reader, is programmed to generate temperature data based on the target data and the infrared radiation signal from the detector.

In some embodiments, the infrared detector includes an array of infrared detectors for capturing an infrared image of the target. The data reader can in some embodiments include a bar code scanner or an RFID reader. The target data may contain compensation data, which the processor can use to generate the temperature data. For example, in some cases the compensation data includes a target's emissivity and/or a reflected temperature, and the processor is programmed to generate the temperature data based on the compensation data and infrared radiation received by the infrared detector.

Some embodiments include a system for noncontact temperature measurement. Such a system can include a radiometer that generates temperature data based on infrared radiation emitted from a target. The system can include one or more data tags containing target data corresponding to one or more targets. The system can also make use of a data reader external to and coupled with the radiometer, adapted to read target data from the data tag and communicate the target data to the radiometer. A processor of the radiometer can be programmed to generate the temperature data based on both the infrared radiation and the target data.

In some embodiments the radiometer can include an array of infrared detectors for capturing an infrared image and the data reader may comprise a bar code scanner and/or an RFID reader. Sometimes the target data includes compensation data that can be used to generate the temperature data. In some embodiments the system can include a memory that stores compensation data for generating temperature data. The processor can retrieve compensation data corresponding to a target identifier that is part of the target data. Sometimes the compensation data comprises a target emissivity and/or a target reflected temperature. The memory can be integral to the radiometer, may be part of a remote computer, and/or a portable memory removably coupled to the radiometer.

A method of noncontact temperature measurement can in some cases include receiving infrared radiation emitted from a target, reading target data from a data tag associated with the target, and automatically generating temperature data based on the infrared radiation and the target data. According to some embodiments, a method of setting up a noncontact temperature measurement route can include identifying at least one target of temperature measurement, providing compensation data corresponding to the target, associating the compensation data with a data tag, and locating the data tag proximate the target. In some cases the compensation data includes an emissivity, reflected temperature, or other information corresponding to the target and the method further includes storing the compensation data on the data tag.

BRIEF DESCRIPTION OF THE DRAWINGS

FIG. 1 is a block diagram of a radiometer according to some embodiments of the invention.

FIG. 2 is a block diagram of a radiometer according to some embodiments of the invention.

FIG. 3 is a block diagram of a data reader employing an optical reader according to some embodiments of the invention.

FIG. 4 is a block diagram of a data reader employing a radio frequency reader according to some embodiments of the invention.

FIG. 5 is a block diagram showing an interaction between a radiometer, a target, and a data tag according to some embodiments of the invention.

FIG. 6 is a block diagram showing an interaction between a radiometer, a target, and a data tag according to some embodiments of the invention.

FIG. 7 is a flow diagram showing a method of setting up a temperature measurement survey according to some embodiments of the invention.

DETAILED DESCRIPTION OF THE PREFERRED EMBODIMENTS

The following detailed description should be read with reference to the drawings, in which like elements in different drawings are numbered identically. It will be understood that embodiments shown in the drawings and described herein are merely for illustrative purposes and are not intended to limit the invention to any embodiment. On the contrary, it is intended to cover alternatives, modifications, and equivalents as may be included within the scope of the invention as defined by the appended claims.

Embodiments of the invention can include a wide variety of noncontact temperature measurement devices or instruments (referred to herein collectively as "radiometers"), and the terminology used herein is not meant to limit the invention to any specific embodiment. To name just a few examples, a temperature measurement instrument or radiometer can include a single spot thermometer, a one-dimensional array of infrared detectors, or a two-dimensional array of detectors capable of producing a thermal image of a target.

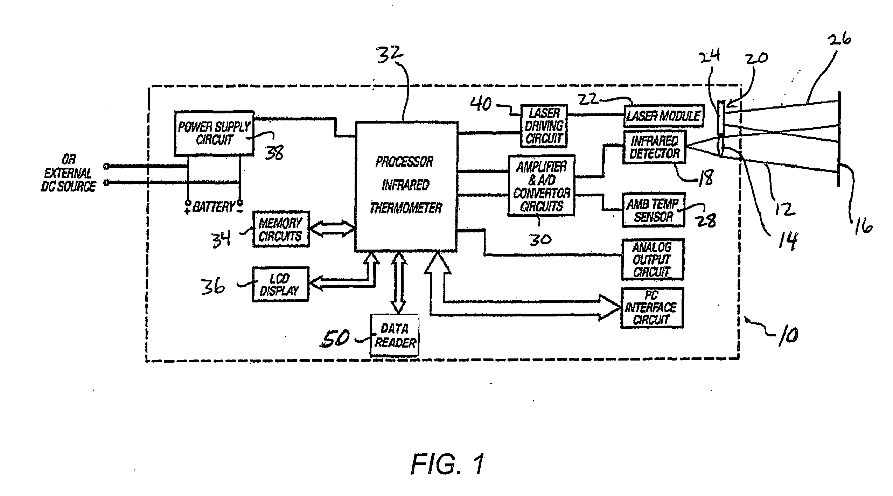

For example, Figure 1 depicts an example of a radiometer 10 in the form of a single spot infrared thermometer according to one embodiment of the invention. An optical envelope 12 represents the field of view of an optical system 14 of the radiometer 10 which determines the actual shape and size of the energy zone on a target surface 16, the infrared radiation of which is sensed by an infrared detector 18 of the radiometer. In some embodiments the radiometer includes a laser sighting device 20 including a laser module 22 and an associated optical system, such as a diffraction grating 24, which projects a laser beam or beams onto the target surface to define a laser target area or ring 26 of visible light which approximately indicates the outline of the energy zone.

As shown in Figure 1, the output signal from the infrared detector 18 and an optional ambient temperature detector 28 are fed via amplifier and analog-to-digital converter circuits 30 to a processor 32, which then generates temperature data using the output signal from the infrared detector 18. The processor 32 is connected to a memory 34, which can contain programming instructions for operating the processor. The radiometer also includes a display 36, and a power supply circuit 38 which powers the radiometer and laser sighting device, either from an internal battery or an external source. The laser module 22 of the sighting device is connected via a laser driving circuit 40 to the processor 32 so that the sighting device will activated and deactivated under the control of the processor.

With further reference to the embodiment of Figure 1, the radiometer 10 includes a data reader 50 that communicates with the processor 32. The data reader 50 allows the radiometer to retrieve target data corresponding to a specific target, as will be further discussed hereinafter. According to one embodiment, the processor is programmed to automatically generate the temperature data based on the received target data and the infrared radiation output signal. In the embodiment depicted in Figure 1, the data reader 50 is built into the radiometer 10, although it could alternatively comprise a separate module or accessory mounted on the radiometer 10 or connected to the radiometer 10 via a communication link. For example, in alternate embodiments, the data reader 50 can communicate with the radiometer 10 via a communication cable or wireless telemetry link. As those skilled in the art will appreciate, Figure 1 depicts just one example of a noncontact temperature measurement instrument. Many different configurations and features can be included with the radiometer 10 as is desired. As just one example, according to some embodiments the radiometer 10 may not include a display 36 and instead may directly store the generated temperature data and/or transmit the data to, e.g., a personal computer via a communication link such as a wired or wireless link. Such an optional embodiment may be useful, for example, to provide a less expensive radiometer or for situations where temperature data is automatically gathered, for example, by a robot.

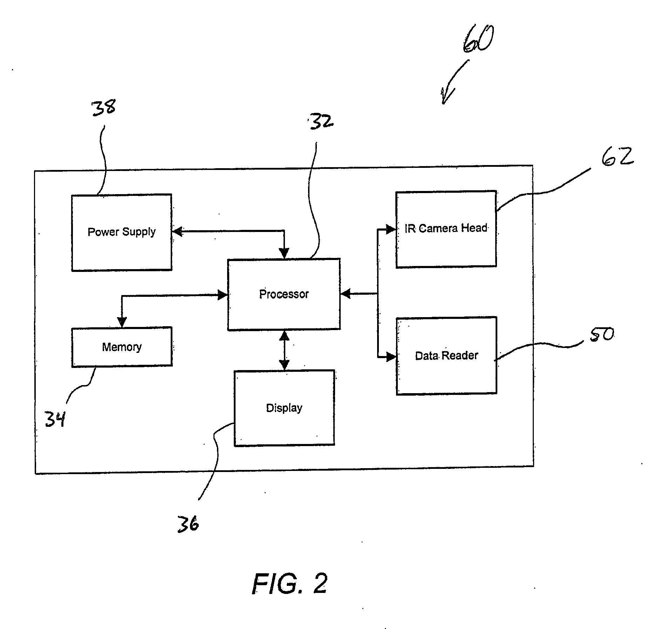

Figure 2 is a high-level block diagram of another example of a radiometer 60, including a thermal imaging system, that can be used in some embodiments of the invention. As depicted here, the radiometer 60 includes an infrared camera head 62, adapted to sense infrared radiation emanating from a target. For example, the camera head 62 includes an optical system such as a lens that focuses infrared radiation from a target onto an infrared detector. The infrared detector can include an array of detectors (*e.g.*, a microbolometer focal plane array) allowing generation of infrared images.

According to this embodiment, the infrared camera head 62 generates and sends raw infrared data to the processor 32, which generates corresponding temperature data that can be sent to a display 36 for viewing. For example, the processor 32 can perform computations to convert the raw infrared image data to scene temperatures, and then to RGB colors corresponding to the scene temperatures and a selected color palette. A memory module 34 is coupled to the processor 32, and can store, among other things, programming instructions for the processor 32. A power supply 38 can provide power to the radiometer 60 as needed by its various components. As will be appreciated by skilled artisans, Figure 2 is highly simplified and the actual components and connections can be modified for alternative designs according to other embodiments.

As shown in Figure 1, the radiometer 60 of Figure 2 also includes a data reader 50 coupled with the processor 32. The data reader 50 is adapted to read target data from a data tag, which can be located in the proximity of a target of measurement. According to one preferred embodiment, the processor 32 is programmed to automatically generate temperature data based on the raw infrared data and the target data that the data reader 50 receives from a particular data tag, as will be discussed in more detail hereinafter. The data reader 50 can be mounted on the radiometer 60, although its location within or without the radiometer can be modified for a particular application. The data reader 50 can read target data from one or more data tags using one or more of a number of implementations. For example, in some embodiments the data reader can be an optical data reader, such as a bar code scanner, adapted to read machine encoded data tags. In another embodiment, the data reader 50 may employ radio frequency identification (RFID) technology to read data tags. Of course these implementations are exemplary in nature and the invention is not limited to these embodiments.

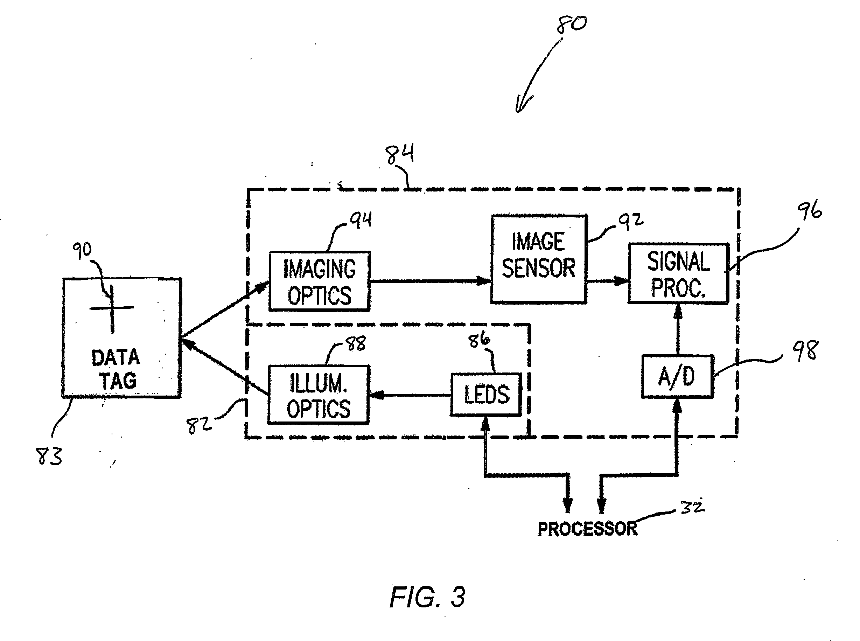

With reference to Figure 3, one example of a possible data reader 80 including an optical data reader is depicted according to one embodiment. The data reader 80, which may, for example, comprise a bar code scanner well known in the art, includes an illumination assembly 82 for illuminating a data tag 83, and an imaging assembly 84 for receiving an image of the data tag 83. According to some embodiments, the data tag 83 can be optically encoded to store target data in the form of a 1 D or 2D bar code symbol. The imaging assembly 84 generates an electrical output signal indicative of the target data optically encoded on the data tag 83, which is ultimately sent to the radiometer's processor 32 to allow the radiometer to generate temperature data according to the decoded target data.

According to the embodiment shown, the illumination assembly 82 may include an illumination source 86, together with illuminating optics 88, for projecting an aiming pattern 90 on the data tag 83. For example, the optics 88 may include one or more lenses, diffusers, wedges, reflectors or a combination of such elements, while the illumination source 86 may comprise, for example, laser or light emitting diodes (LEDs) such as white LEDs or red LEDs.

Imaging assembly 84 may include an image sensor 92, such as a one-dimension (1D) or two-dimension (2D) CCD, CMOS, NMOS, PMOS, CID or CMD solid state image sensor, together with imaging optics 94 for receiving and focusing an image of the data tag 83 onto the image sensor 92. A signal processor 96 and A/D converter 98 can further condition and process the output signal from the image sensor 92. The data reader 80 may in some embodiments also include a general processor for subsequent processing and control, however, these functions may be provided by the radiometer's processor. For example, as shown in Figure 3, the data reader 80 connects to the processor 32 of a radiometer, for example, one of those depicted in Figures 1 and 2.

It will be appreciated that the data reader 80 depicted in Figure 3 is merely one representation of a possible optical data readers or bar code scanner. In additional embodiments the data reader 80 can be fully integrated within the radiometer. For example, in a pistol grip-type radiometer, the data reader's illumination optics 88 and imaging optics 94 may be positioned in the nose of the radiometer proximal to optics for the radiometer's infrared detector. In alternative embodiments, the data reader 80 can be located external to the radiometer housing and may be coupled with the radiometer via a communication link, such as a cable or wireless telemetry link.

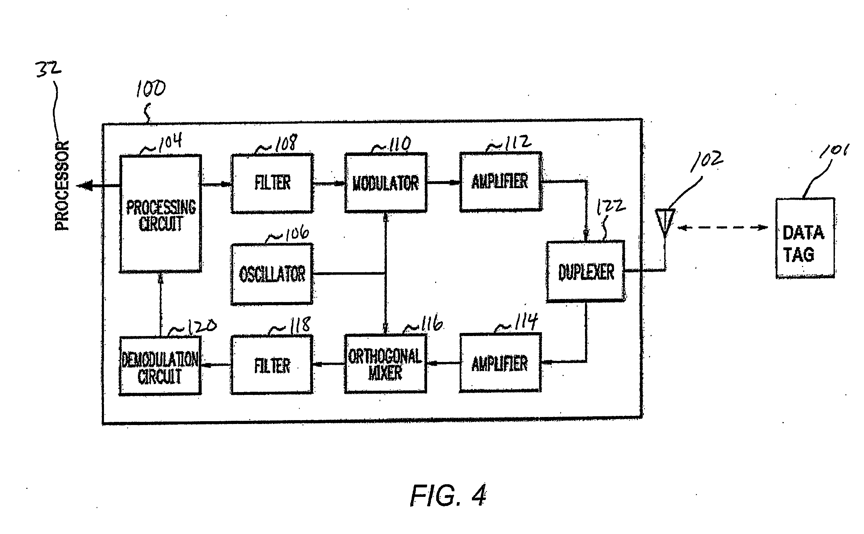

Referring to Figure 4, another example of a possible data reader 100 employing well known RFID technology is depicted according to one embodiment. A data tag 101 associated with a target of measurement can store target data corresponding to the target. For example, the data tag 101 can be an active or passive RFID tag having a memory programmed with the target data. In the case of a passive data tag, the data reader 100 supplies a power source to the data tag 101 by a radio signal and performs a radio communication with the data tag 101 via an antenna 102 to retrieve the target data. An associated radiometer can then generate temperature data according to the target data. The RFID data reader can be integrated into the radiometer or may be a separate device that communicates with the radiometer via a communication link.

As is known, the data reader 100 has circuitry to perform the communication, including in one embodiment a processing circuit 104, an oscillator 106, a transmit portion having a filter 108, a modulator 110, and an amplifier 112, and a receive portion including a second amplifier 114, an orthogonal mixer 116, a second filter 118, and a demodulator 120. A duplexer 122 can connect the transmit and receive portions to the common antenna 102. As shown in Figure 4, the data reader 100 connects to the processor 32 of a radiometer, and in some embodiments may not have its own processing circuit 104.

The data reader 100 can receive an information signal or transmission of timing information from the processor 32 via the processing circuit 104. The processing circuit 104 outputs a command generated by itself and the information signal received from the processor 32. This signal is processed by the transmit portion in the well known way and transmitted via the duplexer 122 and the antenna 102 to the data tag 101. In response, the data tag 101 transmits the target data stored in its memory to the data reader 100, and the antenna 102 outputs the received signal to the receive portion of the data reader circuitry. After processing, the processing circuit 104 outputs the target data read from the data tag 101 to the radiometer processor 32.

The embodiment of Figure 4 illustrates one possible data reader 100 implementing RFID processes, but it will be appreciated that other known designs can be used in alternate embodiments. As one example, active RFID processes may be used wherein the data tag 101 comprises a power source and periodically transmits its target data without prompting from the data reader 100.

The target data can include a wide variety of information related to a particular target. In certain embodiments, the target data may include compensation data that may be used to generate more accurate temperature data for the target. For example, the compensation data may include one or more values of emissivity, transmissivity, reflectivity or reflected temperature, and/or characteristics of the target and/or surrounding environment. In some cases the compensation data may include multiple values, each corresponding to a different wavelength (*e.g.*, emissivity at 1.0 $\mu$m, 1.6 $\mu$m, or 8-14 $\mu$m). In another embodiment, the target data may point to or be associated with compensation data stored in memory as will be described hereinafter.

In certain embodiments, the radiometer's processor is programmed to generate temperature data as a function of the infrared radiation received by the infrared detector and the target data received from the data tag corresponding to a particular target. For example, if the target data comprises compensation data, or identifies compensation data stored in memory, the processor can generate temperature data as a function of the infrared radiation emitted from the target as well as the compensation data. Thus, the radiometer can compensate for factors (*e.g.*, emissivity, transmissivity, reflected temperature, etc.) that contribute to inaccurate temperature data.

Advantageously, embodiments of the invention allow customized, reliable temperature measurements for particular targets, taking into account individual, specific characteristics of a target and/or its environment. For example, data tags with target-specific data can avoid the need to use a single standard or default compensation value (for example, an emissivity value of 1.0 or 0.95) when generating temperature data from different types of targets. Also, instead of relying on post-processing to correct inaccuracies in temperature data, a radiometer's processor can use the target data (*e.g.*, compensation data) corresponding to a target to generate accurate temperature data in real time as an operator conducts a temperature survey.

Additionally, even if an operator knows compensation data values for a specific target, embodiments of the invention can limit or prevent situations in which the operator mistakenly enters an inaccurate value. For example, in certain embodiments additional operator actions may not be necessary to retrieve compensation data. The radiometer may be programmed to automatically retrieve target data including compensation data from a data tag when a user aims the radiometer at the target and actuates a switch to measure the temperature. The processor then receives the compensation data from the data reader and the output from the infrared detector(s) and can generate temperature data based on both. Thus, inaccuracies in temperature measurement can be compensated for without any input from an operator. Such automatic temperature compensation can also be advantageous for measuring and gathering temperature data through automated means, such as a robotic, rather than human, operator.

In some cases compensation data may comprise a particular emissivity of a target. This allows the radiometer to generate more accurate temperature data than if a default or fixed emissivity (*e.g.*, 0.95, 1.0) is used. In one embodiment, the temperature data is generated according to the following relationship

$S = R_{iL}(\lambda) \cdot \varepsilon(\lambda) \cdot L_{\lambda,b}(\lambda, T) \cdot \delta\lambda$

where S is the signal from the infrared detector, $R_{iL}(\lambda)$ is the instrument responsivity, $\varepsilon(\lambda)$ is an emissivity associated with the target, $L_{\lambda,b}(\lambda, T)$ is the radiant flux, and $\delta\lambda$ is the bandwidth. Thus, given the responsivity of the radiometer (*e.g.*, a constant predetermined for the particular instrument), the radiant flux from the target can be determined from the signal received from the detector and the emissivity (*i.e.*, compensation data) received from the data tag. Knowing the radiant flux, the temperature data can then be determined by solving the following relationship,

$$L_{\lambda,b}(\lambda, T) = 2hc^2\lambda^{-5} / [e^{(hc/\lambda kT)-1}]$$

for T, the absolute temperature of the target, where $h = 6.626 \times 10^{-34}$ J·s is Planck's constant, $c = 2.9979 \times 10^8$ m·s⁻¹ is the speed of light in a vacuum, and $k = 1.3807 \times 10^{-23}$ J·K⁻¹ is Boltzmann's constant. In embodiments including a single spot detector, the temperature data may comprise a single temperature generated in this way, while radiometers including infrared detector arrays (*e.g.*, thermal imagers) may generate multiple temperatures corresponding to a single scene.

According to certain embodiments, the compensation data may comprise values associated with multiple properties of a target and its environment. For example, the radiometer may be programmed to generate temperature data that compensates for an emissivity, a reflected temperature, and/or a transmitted temperature, among other values. In such an embodiment, the compensation data can include an emissivity, $\varepsilon(\lambda)$, a reflectivity, $\rho(\lambda)$, and a reflected temperature, $T_\rho$, and/or a transmissivity, $\chi(\lambda)$, and a transmitted or background temperature, $T_X$. The following relationship

$$S = R_{iL}(\lambda) \cdot \varepsilon(\lambda) \cdot L_{\lambda,b}(\lambda, T_\varepsilon) \cdot \delta\lambda + R_{iL}(\lambda) \cdot \rho(\lambda) \cdot L_{\lambda,b}(\lambda, T_\rho) \cdot \delta\lambda + R_{iL}(\lambda) \cdot \chi(\lambda) \cdot L_{\lambda,b}(\lambda, T_\chi) \cdot \delta\lambda$$

can then be solved for the emissive temperature, $T_\varepsilon$ of the target.

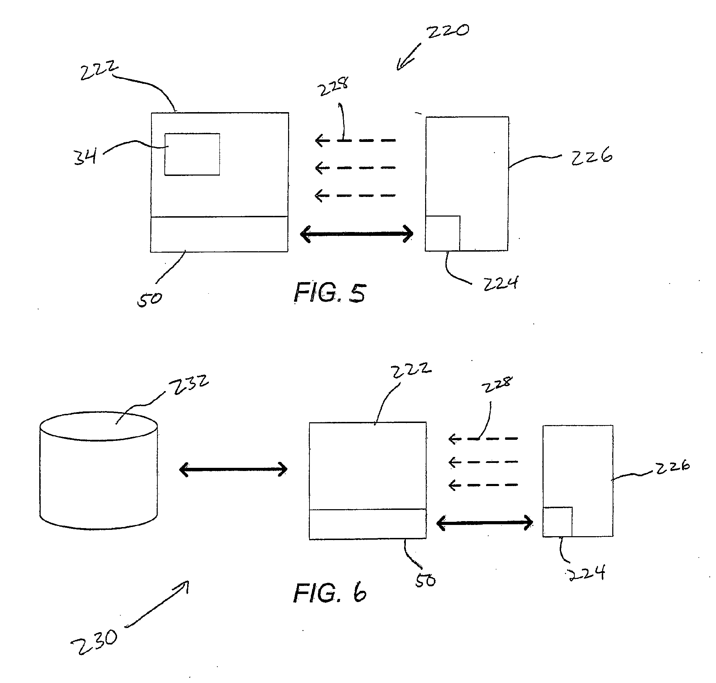

With reference to Figures 5 and 6, block diagrams illustrating a temperature compensation system 220 and a temperature compensation system 230, respectively, are shown according to some embodiments. The systems 220, 230 can include a radiometer 222, and a data tag 224, for measuring the temperature of a target 226. The target 226 radiates infrared radiation 228 towards the radiometer 222. The radiometer 222 collects this radiation and images it onto one or more detectors for generating temperature data. In addition, the radiometer includes a data reader 50 which communicates with the data tag 224 as previously described in order to retrieve target data corresponding to the target 226. Although Figures 5 and 6 show the data reader 50 as part of the radiometer 222, in some embodiments the data reader 50 may actually be external to the radiometer 222 and communicate with the radiometer via a telemetry link.

In preferred embodiments, the data tag 224 is located proximate the target 226 so that the data reader 50 can read the data tag 224 near the time the radiometer 222 captures the infrared radiation 228. For example, if the data reader and tag employ RFID, placing the data tag 224 near or next to the target 226 can allow the data reader and radiometer to receive target data from the tag while the radiometer collects infrared radiation emanating from the target 226. In some embodiments the data tag 224 can be attached or mounted directly to the target 226 as shown in Figure 5, with for example, an adhesive or other fastener. In other embodiments the data tag location may depend upon the temperature characteristics of the target 226. For example, if the data tag 224 has a limited temperature range of operability, the data tag 224 may need to be located off to the side of a target that reaches high temperatures. However, these are merely examples of tag placement and the invention is not limited to any particular placement for a data tag. Many locations are possible, both close to and farther away from the target 226.

At times it may be desirable to link more target data with the target 226 than what the data tag 224 can store. Alternatively, it may be preferable to store additional target data externally from the data tag 224 for other reasons such as ease of access. Referring to Figure 5, in some embodiments, the radiometer 222 and/or data reader 50 can store additional target data within internal memory 34. For example, target data including compensation data corresponding to the target 226 can be stored within the memory 34. The target data retrieved from the data tag 224 can include a target identifier, which is associated with the compensation data for the target in the memory 34. The radiometer can then use the target identifier to look up and retrieve the corresponding compensation data in the memory 34, after which it can adjust the temperature data calculated from the incoming infrared radiation 228.

Referring to Figure 6, a similar method can be used to retrieve target data, such as compensation data, stored within external memory 232. The external memory 232 may be a portable memory device that can interface with the radiometer 222 and/or data reader 50 (*e.g.*, a USB flash drive) or may be integrated within a remote computer. For example, the radiometer 222 or data reader 50 may be configured in some embodiments to interface with a remote computer over a communication link such as a cable or wireless telemetry link. In one embodiment, after retrieving the target identifier from the data tag 224, the radiometer can request compensation data corresponding to the target 226 from the external memory 232 within the remote computer and adjust temperature data for the target 226 accordingly.

According to some embodiments, target data may be indexed within the internal and/or external memory 34, 232, using a plurality of target identifiers corresponding to a plurality of measurement targets. For example, the target identifiers can be alphanumeric values stored on corresponding data tags. Target data can be stored within a database housed within the internal memory 34 or external memory 232. Upon retrieving a target identifier from a data tag, the radiometer can retrieve corresponding target data matching the target identifier and display the target data and/or adjust temperature data with it. The stored target data can include a variety of data for each target, including, for example, compensation data such as emissivity, reflected temperature, and the like. Additionally, past temperature measurements, reference images, notes and other target data can be indexed according to target identifiers as will be appreciated. For example, a visible light image or infrared reference image could be retrieved to assure the technician that the right target is being imaged and/or that the radiometer is properly aligned. Alternatively, previously captured thermal images could be retrieved to compare with a newly captured image.

In some embodiments of the invention, the temperature compensation system can be used within a larger inventory or tracking system, such as the inventory system known under the trademark MET/TRACK® from the Fluke Corporation. In such an embodiment, target identifiers could be used within the inventory system to identify the targets.

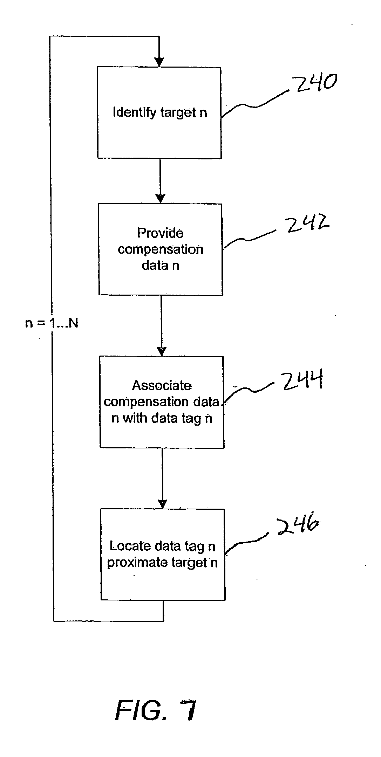

Figure 7 illustrates a method of setting up a temperature measurement survey according to one embodiment of the invention. A technician can set up a target survey by first identifying one or more assets or targets for temperature measurement at 240. For a given number of targets N, the technician can provide target data in the form of compensation data *n* corresponding to each target *n* at 242. For example, the technician may measure, calculate, and/or look up compensation data corresponding to the target.

For example, standard emissivity values are known in the art for a number of different materials at given wavelengths (*e.g.*, at 1.6 $\mu$m, oxidized aluminum is 0.4, polished copper is 0.03). In some cases the technician may determine the emissivity of the target by placing a piece of tape on the target. After allowing the tape to reach the temperature of the target, the technician can measure the target temperature with a radiometer set to an emissivity of 0.98. After removing the tape, the technician again measures the target temperature, adjusting the emissivity until the temperature matches the previous measured temperature. The adjusted emissivity value indicates the emissivity of the target. Many other methods may be used to determine or measure emissivity values, or other compensation data, as will be appreciated.

After providing the compensation data *n* corresponding to target *n,* the technician can associate the compensation data *n* with a data tag *n* at 244. In one embodiment, the technician may have a plurality of data tags, each having a stored target identifier *n.* The technician can link the target identifier *n* with the compensation data *n* (*e.g.*, emissivity) and store or index the compensation data *n* within an internal and/or external memory as described herein. When an inspecting technician reads the data tag *n,* the radiometer retrieves the target identifier *n* from the data tag *n* and retrieves the corresponding compensation data *n* from the internal and/or external memory. For example, the technician may have a number of preprinted bar codes labels or preprogrammed RFID tags with target identifiers. The technician can then assign the target identifier of one label/tag, *i.e.*, data tag *n,* to the target *n* and compensation data *n* within the memory.

In another embodiment, the technician may associate the compensation data n with the data tag n by storing the compensation data on the data tag *n* itself. For example, in one embodiment, the temperature compensation system includes a computer with an accompanying program for converting a desired value, *i.e.*, compensation data such as an emissivity, into a machine-readable bar code. The bar code is then printed onto a label, *i.e.*, data tag *n*, where it can be read back by a radiometer having a data reader as previously described. In yet another embodiment, the technician may program compensation data directly into an RFID tag.

After associating the compensation data *n* with the data tag *n*, the set-up method includes locating the data tag *n* proximate the target *n* at 246, so that the data tag n can be read by the radiometer measuring the temperature of the target *n*. For example, the data tag *n* may be placed on or near the target *n* as discussed in more detail with reference to Figures 5 and 6. Thus, upon locating all N data tags, a technician can complete the temperature measurement survey with a radiometer that receives the infrared radiation from a target along with the target data, and automatically generates temperature data describing the target according to embodiments of the invention.

Multiple embodiments are possible, as will be appreciated. As another example, the technician setting up the survey may provide a first data tag having a target identifier, and then encode a second data tag with the compensation data. Still further, the lead technician could encode both a target identifier and the compensation data into the data tag. Of course other data can also be included, such as, for example, reflectivity, reflected temperature, transmissivity and/or background temperature as will be appreciated.

Thus, embodiments of the RADIOMETER AND TEMPERATURE COMPENSATION SYSTEM are disclosed. Although the invention has been described in considerable detail with reference to certain disclosed embodiments, the disclosed embodiments are presented for purposes of illustration and not limitation and other embodiments of the invention are possible. One skilled in the art will appreciate that various changes, adaptations, and modifications may be made without departing from the scope of the appended claims.

**Claims**

1. A radiometer for measuring a temperature of a target, comprising:

    an infrared detector for sensing infrared radiation from the target and generating a signal corresponding to the infrared radiation;
    an optical system for collecting the infrared radiation and imaging it onto the infrared detector;
    a data reader adapted to read target data corresponding to the target from a data tag; and
    a processor coupled to the infrared detector and the data reader, the processor programmed to generate temperature data based on the signal generated by the infrared detector and the target data.

2. A noncontact temperature-measuring system comprising:

    a radiometer including an infrared detector, an optical system adapted to collect infrared radiation from a target and image it onto the infrared detector, and a processor coupled to the infrared detector, the processor programmed to generate temperature data based on the infrared radiation;
    a data tag comprising target data corresponding to the target; and
    a data reader external to and coupled with the radiometer, the data reader adapted to read the target data from the data tag and communicate the target data to the radiometer, wherein
    the processor of the radiometer is further programmed to generate the temperature data based on the target data.

3. The radiometer of claim 1 or claim 2, wherein the infrared detector comprises an array of infrared detectors for capturing an infrared image of the target.

4. The radiometer of any one of the preceding claims, wherein the data reader comprises a bar code scanner or an RFID reader adapted to read the target data from the data tag.

5. The radiometer of any one of the preceding claims, wherein the target data comprises compensation data corresponding to the target.

6. The radiometer of claim 5, wherein the compensation data comprises one of:

    an emissivity of the target;
    a reflectivity and a reflected temperature of the target; and,
    a transmissivity and a background temperature of the target.

7. The radiometer of any one of the preceding claims, comprising a memory storing compensation data corresponding to the target, wherein the target data comprises a target identifier associated with the stored compensation data.

8. The system of claim 2, wherein the target data comprises a target identifier and further comprising a memory storing compensation data corresponding to the target identifier, and wherein the processor is programmed to retrieve the compensation data from the memory and generate the temperature data based on the compensation data, wherein the compensation data preferably comprises an emissivity of the target.

9. The system of claim 8, further comprising a remote computer, wherein the remote computer comprises the memory.

10. The system of any one of the preceding claims, further comprising a plurality of data tags comprising target data corresponding to a plurality of targets.

11. A method of noncontact temperature measurement, comprising:

   receiving infrared radiation emitted from a target;
   reading target data from a data tag associated with the target; and
   automatically generating temperature data based on the infrared radiation and the target data.

12. A method of setting up a temperature measurement survey, comprising: identifying a target of temperature measurement;

   providing compensation data corresponding to the target;
   associating the compensation data with a data tag; and
   locating the data tag proximate the target, wherein the data tag can be read by a radiometer for generating a temperature of the target based on the compensation data.

13. The method of claim 12, wherein associating the compensation data with the data tag comprises storing the compensation data on the data tag.

14. The method of any one of claims 11 to 13, wherein the target data comprises an emissivity of the target, wherein generating the temperature data based on the target data preferably comprises generating the temperature data based on the emissivity.

15. The method of any one of claims 11 to 14, wherein the target data comprises a target identifier, and further comprising retrieving compensation data corresponding to the target identifier from a memory.

FIG. 1

FIG. 2

EP 2 110 650 A1

FIG. 3

FIG. 4

EP 2 110 650 A1

FIG. 5

FIG. 6

Identify target n _____ 240

Provide compensation data n _____ 242

n = 1...N

Associate compensation data n with data tag n _____ 244

Locate data tag n proximate target n _____ 246

FIG. 7

Europäisches
Patentamt

European
Patent Office

Office européen
des brevets

## EUROPEAN SEARCH REPORT

Application Number

EP 09 25 1110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/139204 A1 (WENG VINCENT [TW] ET AL) 21 June 2007 (2007-06-21) | 1-2,11, 15 | INV. G01J5/00 |
| Y | * paragraph [0014]; figures 1A,2 * | 1-15 | |
| X | WO 2007/054821 A2 (TECNIMED S R L [IT]; BELLIFEMINE FRANCESCO [IT]) 18 May 2007 (2007-05-18) | 1-2, 11-12 | |
| Y | * page 8 - page 9; figure 2 * | 1-15 | |
| Y | US 2002/055178 A1 (WARDLAW STEPHEN C [US]) 9 May 2002 (2002-05-09) * paragraphs [0028], [0050], [0051] * | 1-15 | |
| A | JP 2007 213311 A (HITACHI LTD) 23 August 2007 (2007-08-23) * abstract * | 1-15 | |

TECHNICAL FIELDS
SEARCHED       (IPC)

G01J

The present search report has been drawn up for all claims

| Place of search | Date of completion of the search | Examiner |
|---|---|---|
| Munich | 3 July 2009 | Rödig, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 25 1110

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2009

| Patent document cited in search report | | Publication date | Patent family member(s) | | Publication date |
|---|---|---|---|---|---|
| US 2007139204 | A1 | 21-06-2007 | TW | 272932 B | 11-02-2007 |
| WO 2007054821 | A2 | 18-05-2007 | CN | 101218490 A | 09-07-2008 |
| | | | EP | 1886106 A2 | 13-02-2008 |
| | | | JP | 2008538965 T | 13-11-2008 |
| | | | KR | 20080024116 A | 17-03-2008 |
| | | | US | 2008187022 A1 | 07-08-2008 |
| US 2002055178 | A1 | 09-05-2002 | AU | 756568 B2 | 16-01-2003 |
| | | | AU | 2886999 A | 20-09-1999 |
| | | | CA | 2321684 A1 | 10-09-1999 |
| | | | CN | 1299466 A | 13-06-2001 |
| | | | EP | 1070251 A1 | 24-01-2001 |
| | | | JP | 2003518607 T | 10-06-2003 |
| | | | NO | 20004454 A | 03-11-2000 |
| | | | WO | 9945385 A1 | 10-09-1999 |
| | | | US | 6929953 B1 | 16-08-2005 |
| | | | US | 2002028158 A1 | 07-03-2002 |
| JP 2007213311 | A | 23-08-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4634294 A, Christol